# EUROPEAN PATENT APPLICATION

(11) **EP 4 549 361 A1**
(43) Date of publication of application: **07.05.2025**
(21) Application number: 23831929.7
(22) Date of filing: 29.06.2023
(51) Int. Cl.: B66B 5/28, B66B 7/04, B66B 1/34

(54) **EFFECTIVE GRAVITY CONTROL DEVICE COMPRISING DUAL MODULE**

(30) Priority: 29.06.2022 KR 20220079662; 19.10.2022 KR 20220134723
(71) Applicant: Liin Technologies Incorporated, Hampton, Virginia 23666 (US); Space Liintech Co., Ltd., Daejeon 34054 (KR)
(72) Inventor: YOON, Hargsoon, Yorktown, Virginia 23693 (US); PHAM, Huu Vu, Virginia Beach, Virginia 23464 (US)
(74) Representative: ABG Intellectual Property Law, S.L.
(86) International application number: PCT/KR2023/009147
(87) International publication number: WO 2024/005571

(57) **Abstract**

The present invention relates to an effective gravity control device that implements a zero gravity, microgravity, low gravity, or weighted gravity state of an internal module based on a moving external module.

An effective gravity control device in accordance with an embodiment of the present invention implements a zero gravity, microgravity, low gravity, or weighted gravity state of an internal module mounted in a moving external module, and includes the external module in which a movement space of the internal module is provided and of which at least one physical quantity related to movement is controlled, the internal module moving independently from the external module within the movement space by an external force transmitted through the external module, a position detection sensor configured to detect a position of the internal module within the movement space, a controller configured to generate a control signal for controlling at least one physical quantity related to the movement of the external module based on the position of the internal module detected by the position detection sensor, and an actuator configured to move the external module so that the external module has the at least one physical quantity according to the control signal.

## Description

### TECHNICAL FIELD

The present invention relates to an effective gravity control device including a dual module, and more specifically, to an effective gravity control device that implements a zero gravity, microgravity, low gravity, or weighted gravity state of an internal module based on a moving external module.

### BACKGROUND ART

In general, zero gravity or microgravity is a state in which the Earth's gravity is canceled out and the effective gravity is brought close to zero (0), meaning a state in which there is no weight inside a satellite or spacecraft orbiting the Earth or a free-falling elevator.

One method of creating a state equivalent to zero gravity on Earth is moving an object in free fall. However, since an external force such as air resistance is applied to the object in addition to gravity while the object is falling on Earth, it is difficult to ensure that the effective gravity acting on the object is brought close to zero (0).

In the related art, some experimental devices making it possible to understand and experience the phenomenon of changes in gravity have been suggested, but most of the experimental devices are composed of complex and expensive equipment and thus have a problem in that a change in gravity, zero gravity, or microgravity cannot be easily understood and tested.

### DISCLOSURE OF THE INVENTION

### TECHNICAL PROBLEM

An object of an effective gravity control device of the present invention is to provide a dual module device capable of inducing changes in effective gravity such as zero gravity, microgravity, low gravity, or weighted gravity, and a control method for controlling the same.

Further, an object of an effective gravity control device the present invention is to provide a device configured in the form of a dual module of an external module and an internal module, allowing the internal module positioned inside the external module to stably maintain a state of gravity change without the action of external forces such as air resistance, and a control method therefor.

Further, an object of an effective gravity control device of the present invention is to provide a specific control method for efficiently controlling the movement of dual modules based on data acquired from various sensor units.

### TECHNICAL SOLUTION

In order to solve the aforementioned problems, in accordance with an embodiment of the present invention, an effective gravity control device that implements a zero gravity, microgravity, low gravity, or weighted gravity state of an internal module mounted in a moving external module includes the external module in which a movement space of the internal module is provided and of which at least one physical quantity related to movement is controlled, the internal module moving independently from the external module within the movement space by an external force transmitted through the external module, a position detection sensor configured to detect a position of the internal module within the movement space, a controller configured to generate a control signal for controlling at least one physical quantity related to the movement of the external module based on the position of the internal module detected by the position detection sensor, and an actuator configured to move the external module so that the external module has the at least one physical quantity according to the control signal.

Further, in the effective gravity control device in accordance with an embodiment of the present invention, the physical quantity related to the movement of the external module may be a position or movement speed of the external module.

Further, in the effective gravity control device in accordance with an embodiment of the present invention, the controller may be configured to generate a first control signal for controlling the actuator so that an external force is applied to the internal module through the external module in a first section and generate a second control signal for controlling the actuator by referring to the position of the internal module after the external force applied to the internal module is released in a second section after the first section.

Further, in the effective gravity control device in accordance with an embodiment of the present invention, the controller may generate the second control signal so that a relative distance between the external module and the internal module in the second section is less than a predetermined threshold distance.

Further, in the effective gravity control device in accordance with an embodiment of the present invention, the second section may include a section in which the internal module performs an ideal parabolic movement relative to the ground and the external module makes a movement following the internal module.

Further, in the effective gravity control device in accordance with an embodiment of the present invention, the movement of the external module following the internal module may correspond to a movement based at least in part on an ideal parabolic movement relative to the ground, and may be a movement implemented by the actuator.

Further, in the effective gravity control device in accordance with an embodiment of the present invention, in the first section, a relative distance between the internal module and the external module may be less than a first threshold distance, and in the second section, a relative distance between the internal module and the external module may be less than a second threshold distance.

Further, in the effective gravity control device in accordance with an embodiment of the present invention, in the first section, the internal module and the external module may perform an acceleration movement with the same moving speed due to the external force, and in the second section, the internal module and the external module may have independent movement states, and a relative distance between the internal module and the external module may be less than a second threshold distance.

### ADVANTAGEOUS EFFECTS

An effective gravity control device including a dual module of the present invention and a control method therefor can control a relative position of an internal module by controlling the movement of an external module even in an environment where the external module slows down due to air resistance, thereby providing an advantage that the zero gravity or low gravity state of the internal module accommodated within the external module can be stably maintained for as long as possible.

In addition, the effective gravity control device of the present invention can be designed as a dual module structure in which the internal module accommodating objects is doubly protected by the external module and air resistance around the module and various types of external noise transmitted through a string is blocked, thereby providing an advantage of allowing more stable gravity change experiments to be performed.

In addition, according to the gravity change device of the present invention, by including various sensor means, the stability of experiments conducted in invisible regions can be greatly improved, and by applying a feedback control method based on data obtained from the sensors, the accuracy and precision of experiments according to the device of the present invention can be greatly improved.

### BRIEF DESCRIPTION OF THE DRAWINGS

FIG 1 illustrates an overall configuration of an effective gravity control device of the present invention.
FIG 2 illustrates a schematic block diagram of the effective gravity control device of the present invention.
FIG 3 illustrates a structure of a dual module included in the effective gravity control device of the present invention.
FIG 4 illustrates another example of the dual module included in the effective gravity control device of the present invention.
FIG 5 illustrates a structure of an internal module included in the dual module.
FIG 6 illustrates a cross-section of the dual module included in the effective gravity control device of the present invention.
FIG 7 shows a graph of the relative speed of the internal module and an external module over time when the effective gravity control device of the present invention implements zero gravity or microgravity.
FIG 8 shows a graph of the relative speed of the internal module and the external module over time when the effective gravity control device of the present invention implements zero gravity or microgravity.
FIG 9 schematically illustrates movement states of the internal module and the external module observed from the outside when the effective gravity control device of the present invention implements zero gravity or microgravity.
FIG 10 shows a graph of the relative speed of the internal module and the external module over time when the effective gravity control device of the present invention implements low gravity.

### MODE FOR CARRYING OUT THE INVENTION

Advantages and features of the present invention, and methods for achieving the advantages and features will be clarified with reference to embodiments described below in detail together with the accompanying drawings. However, the present disclosure is not limited to the embodiments disclosed below, but will be implemented in a variety of different forms. The present embodiments are only provided to allow the present disclosure to be complete, and to completely inform those skilled in the art of the scope of the disclosure, and the present disclosure is merely defined by scope of the claims.

Although "first", "second", etc. are used to describe various elements, these elements are of course not limited by these terms. These terms are merely used to distinguish one element from another. Therefore, it goes without saying that a first element mentioned below may also be a second element within the technical spirit of the present invention.

In the following embodiments, terms such as include or have mean the presence of features or components described in the specification, and are not intended to exclude in advance the possibility of adding one or more other features or components.

In drawings, for convenience of description, the sizes of components may be exaggerated or reduced. For example, the size and shape of each component in the drawings are arbitrarily illustrated for convenience of description, the present invention is not limited thereto.

Like reference numerals refer to like elements throughout the specification.

Features of various embodiments of the present invention may be partially or overall coupled to or combined with each other, and may be variously inter-operated with each other and driven technically as those skilled in the art can sufficiently understand. The embodiments of the present invention may be carried out independently from each other, or may be carried out together in co-dependent relationship.

Hereinafter, an effective gravity control device 1000 and of the present invention and a control method therefor will be described in detail with reference to the accompanying drawings.

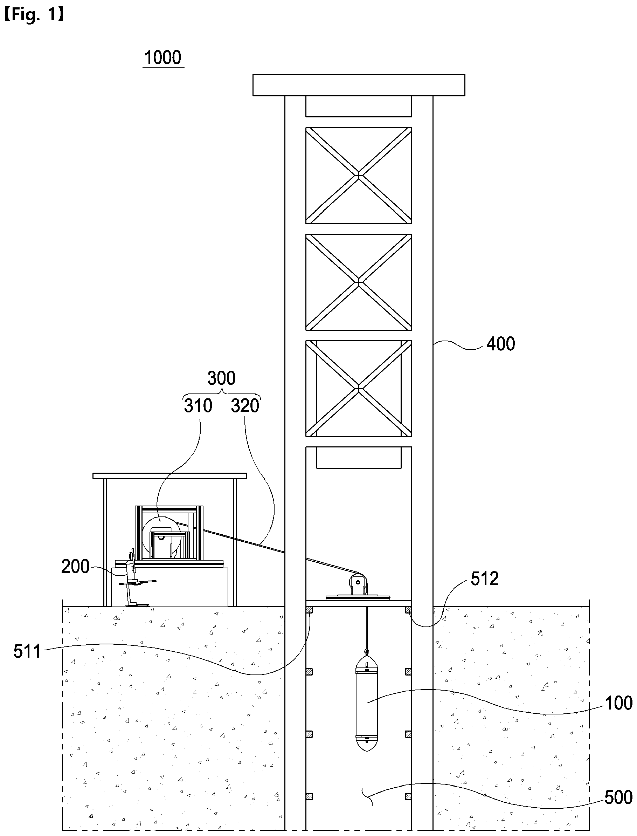

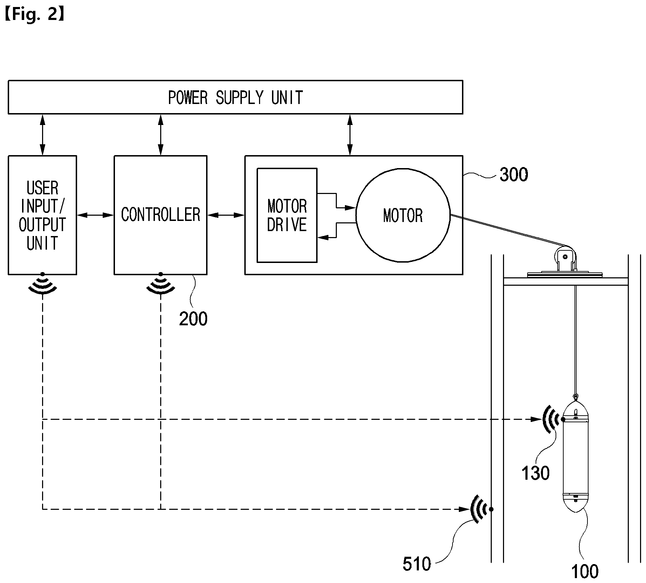

FIG 1 illustrates an overall configuration of the effective gravity control device 1000 of the present invention, and FIG 2 illustrates a schematic block diagram of the effective gravity control device 1000 of the present invention.

Referring to FIG 1, the effective gravity control device 1000 of the present invention is a device that implements a change in gravity using a dual module 100. Specifically, the effective gravity control device 1000 of the present invention is a device that implements a zero gravity, microgravity, low gravity, or weighted gravity state of an internal module 120 mounted in a moving external module 110. Hereinafter, "change in gravity" are meant to encompass all states of zero gravity, microgravity, low gravity, or weighted gravity.

The effective gravity control device 1000 of the present invention includes the dual module 100, a controller 200, an actuator 300, and a support body 400. In addition, the effective gravity control device 1000 of the present invention may additionally include a user input/output unit and a power supply unit as illustrated in FIG 2.

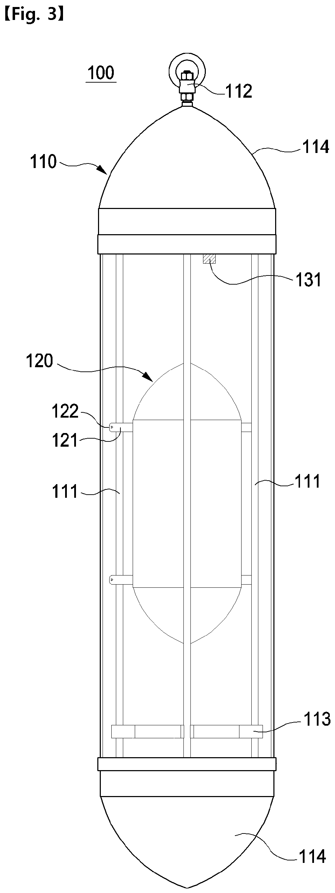

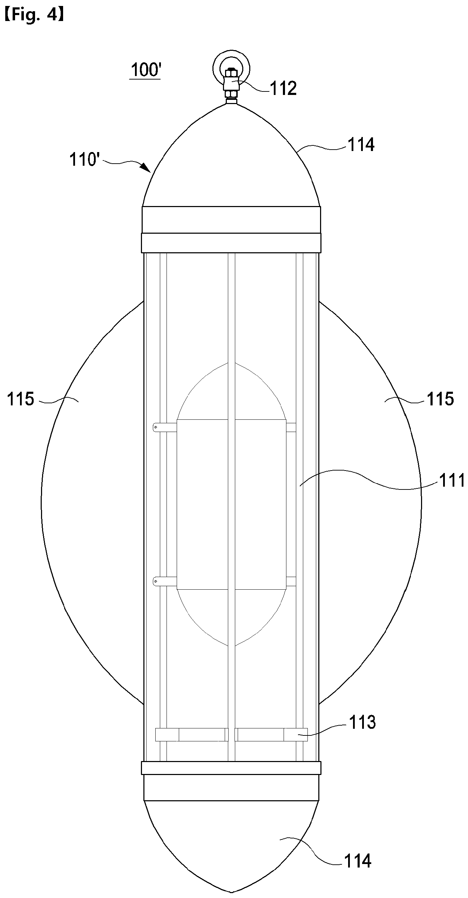

The dual module 100 is a module that implements the change in gravity. A structure of the dual module 100 will be described in detail with reference to FIGS. 3 and 4 below.

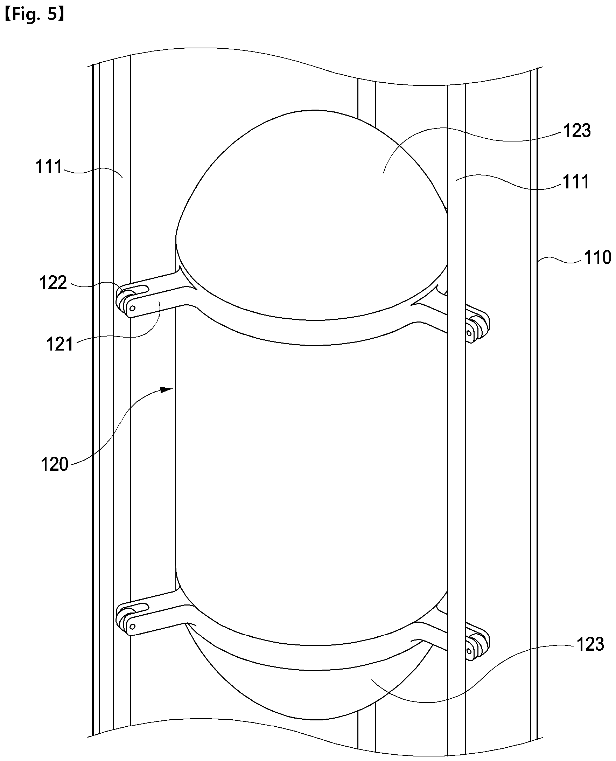

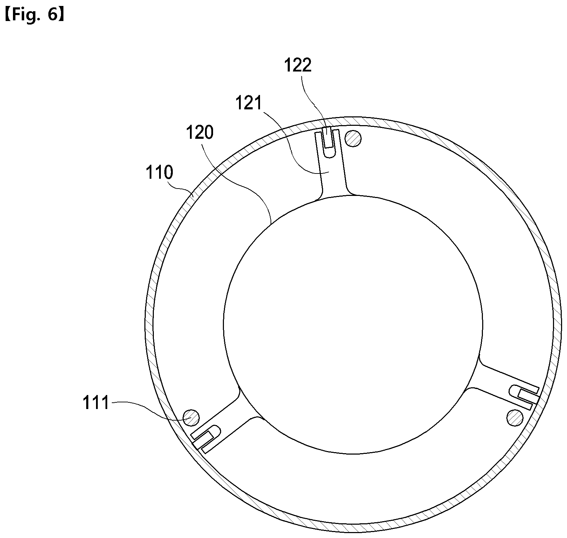

FIG 3 illustrates a structure of a dual module 100 included in the effective gravity control device 1000 of the present invention, FIG 4 illustrates another example of a dual module 100' included in the effective gravity control device 1000 of the present invention, FIG 5 illustrates a structure of the internal module 120 included in the dual module 100, and FIG 6 illustrates a cross-section of the dual module 100 included in the effective gravity control device 1000 of the present invention.

Referring to FIG 3, the dual module 100 includes the external module 110 and the internal module 120 mounted inside the external module 110.

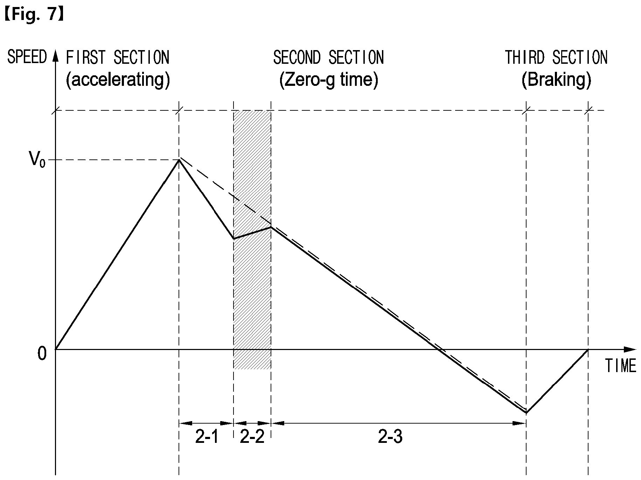

The external module 110 is provided with a movement space the internal module 120 therein. The external module 110 is a module of which movement is controlled by the actuator 300. At least one physical quantity related to the movement of the external module 110 may be controlled by the actuator 300. Here, the physical quantity related to the movement of the external module 110 may be a position or moving speed of the external module 110. A specific control method by which the external module 110 is controlled by the actuator 300 will be described below with reference to FIGS. 7 to 10.

The effective gravity control device 1000 of the present invention may include, as the actuator 300, a motor 310 and a string 320 that are connected to the external module 110 to move the external module 110. Hereinafter, the actuator 300 will be described based on the motor 310 and the string 320.

The external module 110 includes a support member 111.

The support member 111 defines a movement space, which is a moving space of the internal module 120, inside the external module 110 and supports the shape of the external module 110.

The support member 111 is a bar-shaped member disposed along a longitudinal direction of the external module 110. The support member 111 is a bar-shaped member that connects upper and lower parts of the external module 110.

Here, the external module 110 may be formed so that a load of the lower part of the external module 110 is greater than a load of the upper part of the external module 110. When the external module 110 falls in a fall space 500, inappropriate movements such as the upper and lower parts of the external module 110 being reversed or rotated may occur due to air resistance applied to the external module 110. In order to prevent this problem, it is preferable that the load of the lower part of the external module 110 is greater than the load of the upper part of the external module 110, and it is preferable that the support member 111 is connected to the upper part thereof while bearings the load of the lower part of the external module 110.

The external module 110 includes a connection member 112 to which the string 320 is connected at least on one side.

The external module 110 receives an external force from the actuator 300 through the connection member 112. The connection member 112 may be installed in a central portion of an upper end of the external module 110. The connection member 112 may be formed in a ring shape so that the string 320 is able to be connected thereto.

The connection member 112 may include a bearing therein. The connection member 112 may include a bearing member that functions to prevent rotation or twist of the string 320 from being transmitted to the external module 110 or to prevent rotation of the external module 110 from being transmitted to the string 320. In other words, the connection member 112 may include a member such as a bearing so that an inappropriate movement of the string 320 or the external module 110 does not affect each other.

The external module 110 may include a shock absorbing member 113.

The shock absorbing member 113 is provided at at least one end inside the external module 110 and absorbs shock resulting from the movement of the internal module 120. Specifically, the shock absorbing member 113 is a component for reducing impact of the internal module 120 on the external module 110 when the internal module 120 moves up or down within a movement space of the external module 110.

The shock absorbing member 113 may be used to connect a plurality of support members 111 and may have a ring shape. As an example, as an inner cap member 123, which will be described below, touches the ring-shaped shock absorbing member 113, the impact of the internal module 120 on the external module 110 may be reduced. The shock absorbing member 113 or the inner cap member 123 is preferably made of an elastic material.

Meanwhile, in FIG 3, the shock absorbing member 113 is illustrated as being installed only on the lower side of the external module 110, but the shock absorbing member 113 is not limited thereto and may, of course, be installed on the upper side of the external module 110.

The external module 110 may include an outer cap member 114.

The outer cap member 114 is provided at at least one end outside the external module 110 and reduces air resistance due to the movement of the external module 110. Specifically, the outer cap member 114 is formed at both ends of the external module 110 and is a component for minimizing air resistance acting on the external module 110 when the external module 110 moves up or down. The above-described connection member 112 may be formed at an end of the outer cap member 114.

Meanwhile, when the external module 110 falls in the fall space 500, in order to prevent inappropriate movements from occurring, such as the upper and lower parts of the external module 110 being reversed or rotated, an object that applies a load may be accommodated in the outer cap member 114 provided at a lower end of the external module 110. For example, the object that applies the load may be a structure such as a battery mounted on the dual module 100.

The external module 110 may include a position detection sensor 131 for detecting a position of the internal module 120.

The position detection sensor 131 is provided at at least one inner end of the external module 110 and is a means for detecting the position of the internal module 120 within the movement space. Here, the position detection sensor 131 may be a LiDAR sensor for measuring position coordinates of a reflector, that is, the internal module 120, by shooting a laser pulse and measuring the time it takes for the laser pulse to be reflected and returned. In FIG 3, the position detection sensor 131 is illustrated as being installed on the upper side of the external module 110, but the position detection sensor 131 is not limited thereto and may, of course, be installed on the lower side of the external module 110.

Referring to FIG 4 illustrating the dual module 100' according to another embodiment, the dual module 100' includes an external module 110' and the internal module 120 mounted inside the external module 110'.

The external module 110' may further include a wing member 115 compared to the external module 110 described above.

When the external module 110 falls in the fall space 500, the wing member 115 may prevent inappropriate movements such as the upper and lower parts of the external module 110 being reversed or rotated from occurring.

On each side of the external module 110, one wing member 115 may be formed or, three or more wing members 115 may be formed so that there is a preset angle range between the wing members 115. The wing member 115 may, of course, have a curved shape as illustrated in FIG 4, or may be formed to have various other wing shapes.

The dual module 100 includes the internal module 120 mounted inside the external module 110.

The internal module 120 is a module that moves independently from the external module 110 within the movement space of the external module 110 by the external force transmitted through the external module 110.

The internal module 120 is provided with an internal space for transporting objects. Here, the object may be an object that performs an experiment through the change in gravity, and the object may include various types. For example, the internal module 120 may accommodate anything from cells-level objects to objects corresponding to animals or humans.

The internal module 120 includes a plurality of protruding members 121 extending toward an inner wall of the external module 110.

As illustrated in FIG 6, the protruding members 121, together with the support member 111 of the external module 110, may restrict the internal module 120 from rotating beyond a threshold value within the movement space of the external module 110. Even when the internal module 120 rotates within the movement space, the protruding members 121 may prevent the internal module 120 from going beyond the position where the support member 111 is installed, and thereby the internal module 120 may be restricted from rotating beyond a predetermined angle.

The internal module 120 includes rollers 122 provided at ends of the respective protruding members 121.

The roller 122 is a component for reducing friction caused by contact between the external module 110 and the internal module 120. The roller 122 is disposed to extend from the internal module 120 and contact the inner wall of the external module 110. When the internal module 120 contacts the external module 110 during the movement, the roller 122 may minimize the action of unnecessary external force such as friction force acting on the internal module 120. It is preferable that the internal module 120 moves smoothly along the inner wall of the external module 110.

In describing the present invention, the roller 122 is exemplified, but of course, various means other than the roller 122 may be applied as long as the means is a component for reducing friction between the internal module 120 and the external module 110. For example, the roller 122 may be a roller bearing member that performs one-dimensional linear motion as illustrated in FIGS. 5 and 6, or may be a ball bearing member that performs multi-angular rotational motion.

Meanwhile, the support body 400 is a device for providing the fall space 500 where the dual module 100 moves. The support body 400 may be installed on the ground or a building to form the fall space 500 where the dual module 100 moves. As illustrated in FIG 1, the support body 400 may be a facility extending upward and downward from a reference surface. FIG 1 illustrates an example where the support body 400 extends underground based on the ground to form a vertical space in which the dual module 100 moves and extends above the ground to provide an installation space for the effective gravity control device 1000.

Various sensor units 510 for monitoring the movement of the dual module 100 may be disposed in the fall space 500.

The sensor units 510 include a position detection sensor 511 for detecting the movement or position of the dual module 100, especially the external module 110. In addition, the sensor units 510 may include a camera 512 for acquiring an image to monitor the movement or position of the external module 110. The sensor units 510 installed in the fall space 500 may include an infrared sensor and a temperature sensor as well as various sensors such as the position detection sensor 131 and the camera 512.

Hereinafter, with reference to FIGS. 7 to 10, a control method for implementing the change in gravity by the effective gravity control device 1000 of the present invention will be described in detail. Description will be made with reference to FIGS. 1 to 6 described above together.

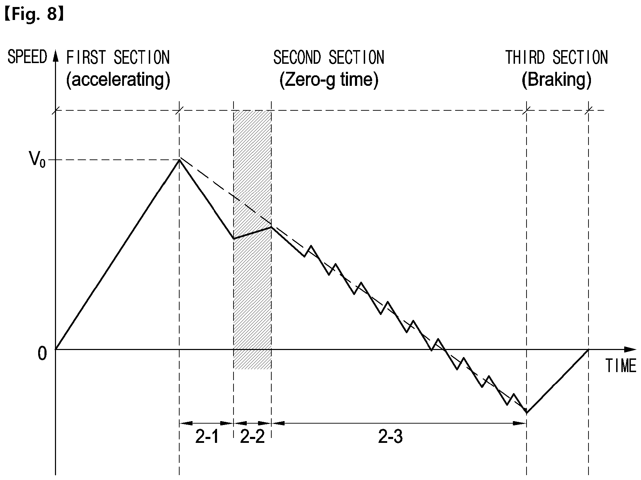

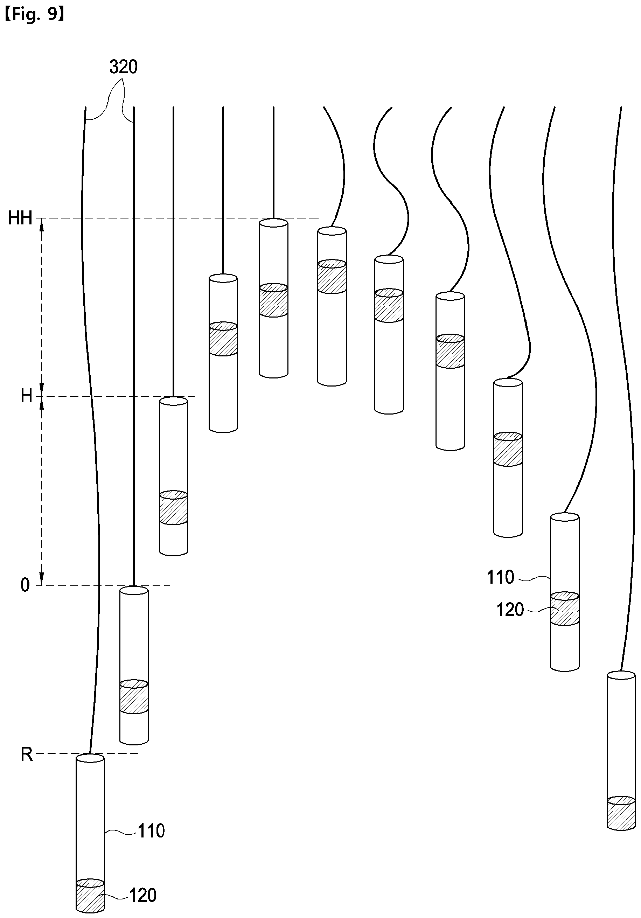

FIGS. 7 and 8 show graphs of a relative speed of the external module 110 and the internal module 120 over time when the effective gravity control device 1000 of the present invention implements zero gravity or microgravity, and FIG 9 schematically illustrates movement states of the external module 110 and the internal module 120 observed from the outside when the effective gravity control device 1000 of the present invention implements zero gravity or microgravity.

The controller 200 generates a control signal of the actuator 300 for controlling the movement of the external module 110. The controller 200 generates a control signal for controlling at least one physical quantity related to the movement of the external module 110.

The controller 200 may receive data about the external module 110 and the internal module 120 from the above-described sensor units 130 and 510 and generate a control signal for controlling the movement of the external module 110 based on the received data. The controller 200 may receive data about the positions of the external module 110 and the internal module 120 from the position detection sensors 131 and 511 and the camera 512 and generate a control signal for controlling the movement of the external module 110 based on the received position data for the external module 110 and the internal module 120.

Meanwhile, in addition to the position detection sensor 131, the controller 200 may receive data about the state of the dual module 100 through the sensor unit 130 mounted on the dual module 100 and the sensor unit 510 installed in the fall space 500. For example, when the controller 200 determines that an event such as device overheating, abnormal movement detection, shock occurrence detection, or the like, has occurred through the sensor units 130 and 510, the controller 200 may generate a control signal such as emergency braking or the like.

The actuator 300 moves the external module 110 so that the external module 110 has at least one physical quantity according to the control signal received from the controller 200. The actuator 300 may include the motor 310, a motor drive for controlling the motor, and the string 320 connected to the motor 310.

Meanwhile, in describing the effective gravity control device 1000 of the present invention, the actuator 300 is described with the motor 310 and the string 320, but the scope of the present invention is not limited thereto, and as the actuator 300, of course, a pneumatic actuator, a hydraulic actuator, a rail structure, a magnetic levitation method, or the like, may be applied.

The physical quantity related to the movement of the external module 110 may be the speed of the external module 110, the position of the external module 110, the relative position of the external module 110 and the internal module 120, or the relative speed of the external module 110 and the internal module 120. FIGS. 7, 8, and 10 illustrate the movement state of the dual module 100 of the present invention from the perspective of controlling the relative speed of the external module 110 and the internal module 120, and FIG 9 illustrates the movement state of the dual module 100 of the present invention from the perspective of controlling the relative position of the external module 110 and the internal module 120.

In the present invention, as illustrated in FIG 9, the controller 200 generates a control signal for controlling the gravity of the dual module 100 while rising from a bottom of the fall space 500 formed by the support body 400, starting from the bottom. The controller 200 applies tension to the string 320 connected to the upper side of the external module 110 so that the external module 110 and the internal module 120 rise vertically upward from the bottom, which is a starting point.

Referring to FIGS. 7 and 8, the controller 200 may generate control signals for accelerating the dual module 100 (corresponding to a first section), inducing the change in gravity (corresponding to a second section), and braking (corresponding to a third section). Specifically, the controller 200 generates a first control signal in the first section for accelerating the dual module 100. The controller 200 generates a second control signal in the second section in which a change in gravity, for example, zero gravity (zero-g) or microgravity, acts on the internal module 120 of the dual module 100. In addition, the controller 200 generates a third control signal in the third section in which the dual module 100 is braking.

Hereinafter, a method for controlling the movement of the external module 110 and the internal module 120 in the first section will be described.

The controller 200 generates the first control signal for controlling the actuator 300 so that an external force is applied to the internal module 120 through the external module 110 in the first section.

The first control signal is a control signal for pulling the string 320 connected to the external module 110 with the force or torque of the motor. In the first section, which is an acceleration section, by this first control signal, the external module 110 and the internal module 120 move up from the bottom as one unit.

As illustrated in FIGS. 7 and 8, in the first section, the speed of the external module 110 (shown by a solid line) and the speed of the internal module 120 (shown by a dotted line) may have the same speed and accelerate. In the first section, the external module 110 and the internal module 120 move up to a preset speed V₀ by the actuator 300. In the first section, the relative speed of the internal module 120 and the external module 110 may be less than a first threshold speed, where the first threshold speed may substantially correspond to zero. In other words, the relative speed of the internal module 120 and the external module 110 in the first section may be zero.

As illustrated in FIG 9, in the first section, the external module 110 and the internal module 120 move up from the bottom (not illustrated) to a point "R". At this time, the internal module 120 is positioned in a seated state on the lower side of the external module 110, and the internal module 120 moves up together with the external module 110 by the external force applied through the external module 110. In the first section, the relative position of the internal module 120 and the external module 110 may be less than a first threshold position, where the first threshold position may substantially correspond to zero. In other words, the relative position of the internal module 120 and the external module 110 in the first section may be zero.

Hereinafter, a method for controlling the movement of the external module 110 and the internal module 120 in the second section will be described.

First, the second control signal in the second section is a combination of various control signals for inducing a change in effective gravity in the internal module 120 mounted within the external module 110.

The second section, which is an effective gravity control section, may include a 2-1 section in which the internal module 120 is separated from the external module 110, a 2-2 section in which the speed or position of the external module 110 is corrected based on the position data about the internal module 120, or a 2-3 section in which the external module 110 follows the speed or position of the internal module 120.

First, a method for controlling the movement of the external module 110 and the internal module 120 in the 2-1 section will be described.

The controller 200 generates a 2-1 control signal for separating the internal module 120 from the external module 110. The controller 200 generates a signal for causing the internal module 120 to initiate a movement independently from the external module 110 in the 2-1 section, which is the moment when the first section enters the second section.

The 2-1 control signal is a motor control signal for separating the internal module 120 from the external module 110. The 2-1 control signal may be a signal for releasing the external force applied to the internal module 120 through the external module 110 at the moment when the dual module 100 reaches a preset speed or at the moment when the dual module 100 reaches a preset position. In other words, the 2-1 control signal may be a signal for temporarily releasing the force or torque of the motor 310 applied to the string 320 connected to the external module 110 at the moment when the dual module 100 reaches the preset speed or at the moment when the dual module 100 reaches the preset position.

As illustrated in FIGS. 7 and 8, in the 2-1 section, the speed of the external module 110 (shown by a solid line) and the speed of the internal module 120 (shown by a dotted line) gradually become different. Due to external forces such as air resistance applied to the external module 110, the speed of the external module 110 decelerates faster than the speed of the internal module 120. The difference between the speed of the external module 110 and the speed of the internal module 120 gradually increases. The movement in the 2-1 section is maintained until the relative speed of the internal module 120 and the external module 110 reaches a preset second threshold speed. The movement in the 2-1 section is maintained until the speed difference between the internal module 120 and the external module 110 reaches the preset second threshold speed. Here, the second threshold speed may correspond to a difference between the dotted line and the solid line at a boundary between the 2-1 section and the 2-2 section.

The point where the 2-1 section is entered is shown as the point "R" in FIG 9. In this case, the internal module 120, which is seated on the lower side of the external module 110, moves up independently from the external module 110. Upon entering the second section after the first section, separation of the internal module 120 from the external module 110 begins.

In the 2-1 section, the internal module 120 moves vertically upward within the external module 110 due to inertia according to the external force transmitted from the external module 110. The 2-1 section corresponds to a section in which the external module 110 rises from the point "R" to the point "0" in FIG 9. In the 2-1 section, the positions of the external module 110 and the internal module 120 gradually become different. Due to external forces such as air resistance applied to the external module 110, the rising speed of the external module 110 decelerates faster than the rising speed of the internal module 120. The difference between the position of the external module 110 and the position of the internal module 120 gradually increases. The movement in the 2-1 section is maintained until the relative position of the internal module 120 and the external module 110 reaches a preset second threshold position. Here, the second threshold position may be the distance from the bottom of the external module 110 to the bottom of the internal module 120, or the distance from the top of the external module 110 to the top of the internal module 120.

In the 2-1 section, the external module 110 performs a decelerated movement relative to the ground. At this time, a force applied to the external module 110 may be the sum of gravity and air resistance. The internal module 120 may perform an ideal parabolic movement relative to the ground. The ideal parabolic movement may be a parabolic movement in a vacuum or a movement close to the parabolic movement in vacuum. In this case, it is preferable that the force applied to the internal module 120 is gravity. A slope of a speed graph (shown by a dotted line) of the internal module 120 preferably has a slope value corresponding to the acceleration of gravity. However, a case where there is a slight air resistance applied to the internal module 120 or the like is not excluded from the scope of the present invention.

Next, a method for controlling the movement of the external module 110 and the internal module 120 in the 2-2 section will be described.

The controller 200 generates a 2-2 control signal for correcting the speed or position of the external module 110. The controller 200 generates a signal for correcting the position of the external module 110 based on the position data about the internal module 120 in the 2-2 section after the 2-1 section.

The 2-2 control signal is a motor control signal for causing the external module 110 to keep up with the movement of the internal module 120. The 2-2 control signal may be a signal for greatly applying tension of the string 320 to the external module 110. In other words, the 2-2 control signal may be a signal for temporarily applying a large force or torque of the motor 310 to the string 320 connected to the external module 110 at the moment when the speed difference between the internal module 120 and the external module 110 reaches the preset second threshold position or at the moment when the position difference between the internal module 120 and the external module 110 reaches the preset second threshold position.

As illustrated in FIGS. 7 and 8, in the 2-2 section, the difference between the speed of the external module 110 (shown by a solid line) and the speed of the internal module 120 (shown by a dotted line) gradually decreases. In order to compensate for an external force such as air resistance applied to the external module 110 and the like, when tension is momentarily applied to the external module 110, the speed of the external module 110 temporarily accelerates. At this time, the difference between the speed of the external module 110 and the speed of the internal module 120 gradually decreases. Until the relative speed of the internal module 120 and the external module 110 reaches 0 (zero) or until the relative speed of the internal module 120 and the external module 110 reaches a preset third threshold speed, the movement in the 2-2 section is maintained. Here, the third threshold speed may correspond to a difference between the dotted line and the solid line at a boundary between the 2-2 section and the 2-3 section.

In the 2-2 section, the external module 110 moves up more than the internal module 120 moves up. In other words, in the 2-2 section, the external module 110 moves to catch up with the internal module 120. The 2-2 section corresponds to a section in which the external module 110 rises from the point "0" to a point "H" in FIG 9. The 2-2 section is a section in which the tension of the string 320 applied to the external module 110 is maintained. In the 2-2 section, the difference between the position of the external module 110 and the position of the internal module 120 may gradually decrease. By the tension overcoming the air resistance applied to the external module 110, the rising speed of the external module 110 accelerates faster than the rising speed of the internal module 120. The movement in the 2-2 section is maintained until the relative position of the internal module 120 and the external module 110 reaches a preset third threshold position. Here, the third threshold position may be the distance from the bottom of the external module 110 to the bottom of the internal module 120, or the distance from the top of the external module 110 to the top of the internal module 120.

Next, a method for controlling the movement of the external module 110 and the internal module 120 in the 2-3 section will be described.

The controller 200 generates a 2-3 control signal for causing the external module 110 to follow the speed or position of the internal module 120. The controller 200 generates a feedback control signal for causing the external module 110 to follow the position of the internal module 120 based on the position data about the internal module 120 in the 2-3 section after the 2-2 section.

The 2-3 control signal is a motor control signal for causing the external module 110 to follow the movement of the internal module 120. The 2-3 control signal may be a signal for feedback-controlling the tension of the string 320 applied to the external module 110 based on the position or speed of the internal module 120. In other words, the 2-3 control signal may be a feedback control signal for causing the external module 110 to follow the position of the internal module 120 at the moment when the speed difference between the internal module 120 and the external module 110 reaches the preset third threshold speed or at the moment when the position difference between the internal module 120 and the external module 110 reaches the preset third threshold position.

As illustrated in FIGS. 7 and 8, in the 2-3 section, the speed of the external module 110 (shown by a solid line) and the speed of the internal module 120 (shown by a dotted line) may be substantially the same. When tension for compensating for the external force such as air resistance is applied to the external module 110, the speed of the external module 110 may have a speed similar to a state of the internal module 120 maintaining an ideal parabolic movement state.

Here, the reference to the speed of the external module 110 (shown by the solid line) and the speed of the internal module 120 (shown by the dotted line) being substantially the same may refer to a state in which the relative speed of the internal module 120 and the external module 110 is substantially 0 (zero) as illustrated in FIG 7. In contrast, the reference to the speed of the external module 110 (shown by the solid line) and the speed of the internal module 120 (shown by the dotted line) being substantially the same may refer to a state in which, even if there is a slight difference in the relative speed of the internal module 120 and the external module 110, the speed of the external module 110 is continuously adjusted to the speed of the internal module 120. In other words, the reference to the speed of the external module 110 (shown by the solid line) and the speed of the internal module 120 (shown by a dotted line) being substantially the same includes the state in the 2-3 section illustrated in FIG 7 and the state in the 2-3 section illustrated in FIG 8.

In the 2-3 section, the movement is maintained until the internal module 120 and the external module 110 are substantially brought into contact with each other. The movement in the 2-3 section may be maintained until the inner cap member 123 of the internal module 120 approaches the shock absorbing member 113 of the external module 110 by a preset distance.

The 2-3 section corresponds to a section in which the external module 110 rises from the point "H" to a point "HH" and then falls in FIG 9. The 2-3 section is a section in which the tension of the string 320 applied to the external module 110 is maintained for a certain period and then released. It is preferable that the difference between the position of the external module 110 and the position of the internal module 120 in the 2-3 section is maintained within a preset distance range.

The movement of the external module 110 following the internal module 120 in the 2-3 section corresponds to a movement that is at least partially based on an ideal parabolic movement with respect to the ground. This movement is an ideal parabolic movement in which the internal module 120 falls due to gravity, while the movement of the external module 110 is a movement implemented by feedback control by the controller 200 and the actuator 300.

Therefore, through the control method by the controller 200 in the second section, an advantage of increasing a flight time (that is, net fall time) of the internal module is gained. Through the control method by the controller 200 in the second section, even in environments where the external module 110 slows down due to air resistance, by controlling the relative positions of the internal module 120 and the external module 110, the ideal parabolic movement state of the internal module 120 accommodated within the external module 110 may be stably maintained for as long as possible.

Hereinafter, a method for controlling the movement of the external module 110 and the internal module 120 in the third section will be described.

The controller 200 generates a third control signal for braking the external module 110 and the internal module 120 in the third section. The third control signal is a control signal for pulling the string 320 connected to the external module 110 with the force or torque of the motor. By this third control signal, the external module 110 and the internal module 120, which are accelerating, collectively perform a movement to reduce their speed.

As illustrated in FIGS. 7 and 8, in the third section, the speed of the external module 110 (shown by a solid line) and the speed of the internal module 120 (shown by a dotted line) may have the same speed and decelerate. In the third section, the external module 110 and the internal module 120 are brought to a stop by the actuator 300. At this time, since the external module 110 and the internal module 120 are substantially in contact, the relative speed of the internal module 120 and the external module 110 in the third section may be zero.

Referring to FIG 9, the third section may represent a movement state (not illustrated) after a point where the external module 110 and the internal module 120 meet again (a final state illustrated in FIG 9).

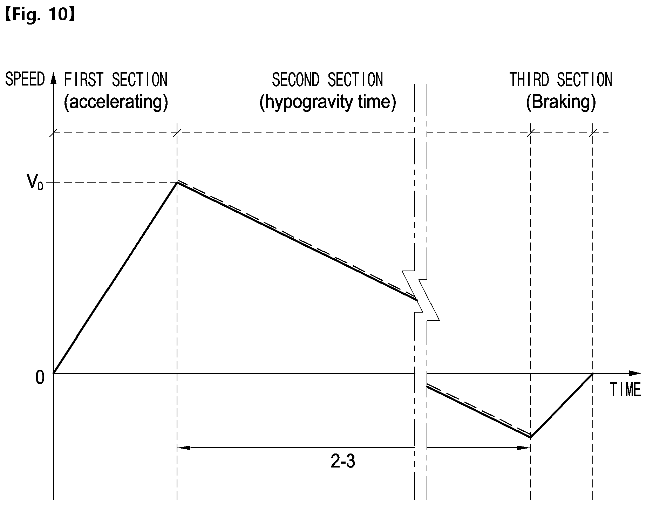

Meanwhile, FIG 10 shows a graph of the relative speed of the internal module 120 and the external module 110 over time when the effective gravity control device 1000 of the present invention implements hypogravity or low gravity.

In implementing a low gravity state in the internal module 120, the external module 110 and the internal module 120 move in a substantially attached state. The internal module 120 is positioned in a seated state on the lower side of the external module 110, and the internal module 120 moves up and down together with the external module 110 by the external force applied through the external module 110.

Referring to FIG 10, the controller 200 may generate control signals for accelerating the dual module 100 (corresponding to a first section), inducing the change in gravity (corresponding to a second section), and braking (corresponding to a third section). Specifically, the controller 200 generates a first control signal in the first section for accelerating the dual module 100. The controller 200 generates a second control signal in the second section in which low gravity acts on the internal module 120 of the dual module 100. In addition, the controller 200 generates a third control signal in the third section in which the dual module 100 is braking.

Here, the first section of acceleration and the third section of braking are substantially the same as those described in FIGS. 7 to 9 that implement microgravity. However, the movement according to FIG 10 that implements low gravity in the second section for inducing a change in gravity is characterized in that it does not include the 2-1 section in which the internal module 120 is separated from the external module 110 and the 2-2 section in which the speed or position of the external module 110 is corrected based on the position data for the internal module 120. The movement according to FIG 10 that implements low gravity is characterized in that it includes only a section similar to the 2-3 section in which the external module 110 follows the internal module 120 in the second section for inducing the change in gravity.

In most sections in which low gravity is implemented in the internal module 120, the relative speed of the internal module 120 and the external module 110 may be less than a first threshold speed, where the first threshold speed may substantially correspond to zero. In other words, in most sections in which low gravity is implemented in the internal module 120, the relative speed of the internal module 120 and the external module 110 may be zero. In addition, in most sections in which low gravity is implemented in the internal module 120, the relative position of the internal module 120 and the external module 110 may be less than a first threshold position, where the first threshold position may substantially correspond to zero. In other words, in most sections in which low gravity is implemented in the internal module 120, the relative position of the internal module 120 and the external module 110 may be zero.

In this case, the controller 200 may generate a signal for controlling the speed or position of the external module 110. A 2-3 control signal that implements low gravity is a motor control signal for controlling the speed or position of the external module 110 to have a preset speed or position.

In implementing microgravity, the 2-3 control signal is the feedback control signal for controlling the speed or position of the external module 110 based on speed or position data of the internal module 120, while in implementing low gravity, the 2-3 control signal is different in that it is the motor control signal for controlling the speed or position of the external module 110 to have the preset speed or position.

In the above, the embodiments of the present invention have been described with reference to the accompanying drawings, and those of ordinary skill in the art to which this subject matter pertains could understand that the additional or alternative embodiments may be embodied in other specific forms without departing from the technical spirit or essential features of the present invention. Therefore, it is to be appreciated that the embodiments described above are intended to be illustrative in all respects and not restrictive.

## Claims

1. An effective gravity control device that implements a zero gravity, microgravity, low gravity, or weighted gravity state of an internal module mounted in a moving external module, the effective gravity control device comprising:
the external module in which a movement space of the internal module is provided and of which at least one physical quantity related to movement is controlled;
the internal module moving independently from the external module within the movement space by an external force transmitted through the external module;
a position detection sensor configured to detect a position of the internal module within the movement space;
a controller configured to generate a control signal for controlling at least one physical quantity related to the movement of the external module based on the position of the internal module detected by the position detection sensor; and
an actuator configured to move the external module so that the external module has the at least one physical quantity according to the control signal.

2. The effective gravity control device of claim 1, wherein the physical quantity related to the movement of the external module is a position or movement speed of the external module.

3. The effective gravity control device of claim 1, wherein the controller is configured to:
generate a first control signal for controlling the actuator so that an external force is applied to the internal module through the external module in a first section; and
generate a second control signal for controlling the actuator by referring to the position of the internal module after the external force applied to the internal module is released in a second section after the first section.

4. The effective gravity control device of claim 3, wherein the controller generates the second control signal so that a relative distance between the external module and the internal module in the second section is less than a predetermined threshold distance.

5. The effective gravity control device of claim 4, wherein the second section includes a section in which the internal module performs a parabolic movement relative to the ground and the external module makes a movement following the internal module.

6. The effective gravity control device of claim 5, wherein the movement of the external module following the internal module corresponds to a movement based at least in part on a parabolic movement relative to the ground and is a movement implemented by the actuator.

7. The effective gravity control device of claim 3, wherein in the first section, a relative distance between the internal module and the external module is less than a first threshold distance, and
in the second section, a relative distance between the internal module and the external module is less than a second threshold distance.

8. The effective gravity control device of claim 3, wherein in the first section, the internal module and the external module perform an acceleration movement with the same moving speed due to the external force, and
in the second section, the internal module and the external module have independent movement states, and a relative distance between the internal module and the external module is less than a second threshold distance.
